# FASCICULE DE BREVET EUROPEEN

(11) **EP 3 247 632 B1**
(45) Date de publication et mention de la délivrance du brevet: **26.06.2019**
(21) Numéro de dépôt: 16702579.0
(22) Date de dépôt: 21.01.2016
(51) Int. Cl.: B64D 29/06, B64D 33/04, F02K 1/72

(54) **NACELLE DE TURBORÉACTEUR D'AÉRONEF**
FLUGZEUGTURBOSTRAHLTRIEBWERKSGONDEL
AIRCRAFT TURBOJET ENGINE NACELLE

(30) Priorité: 21.01.2015 FR 1550489
(43) Date de publication de la demande: 29.11.2017
(73) Titulaire: Safran Nacelles, 76700 Gonfreville-l'Orcher (FR)
(72) Inventeur: KERBLER, Olivier, 76700 Gonfreville L'Orcher (FR); METEZEAU, Fabrice Henri Emile, 76700 Gonfreville L'Orcher (FR); GONIDEC, Patrick, 76700 Gonfreville L'Orcher (FR); GRALL, Loïc, 76700 Gonfreville L'Orcher (FR)
(74) Mandataire: Gaillarde, Frédéric F. Ch.
(86) Numéro de dépôt international: PCT/FR2016/050119
(87) Numéro de publication internationale: WO 2016/116709

(56) Documents cités:
- FR-A1- 2 999 239
- GB-A- 1 147 351
- US-A- 3 280 562
- US-B1- 7 484 356

## Description

L'invention se rapporte à une nacelle de turboréacteur, à un ensemble propulsif équipé d'une telle nacelle, ainsi qu'à un aéronef pourvu d'un tel ensemble propulsif.

Un aéronef est propulsé par plusieurs turboréacteurs logés chacun dans une nacelle, chaque nacelle abritant en outre un ensemble de dispositifs d'actionnement annexes liés à son fonctionnement et assurant diverses fonctions lorsque le turboréacteur est en fonctionnement ou à l'arrêt.

Les nacelles modernes sont destinées à abriter un turboréacteur double flux apte à générer par l'intermédiaire des aubes de la soufflante en rotation un flux de gaz chauds (également dénommé flux primaire) et un flux d'air froid (également dénommé flux secondaire) qui circule à l'extérieur du turboréacteur à travers un passage annulaire, également appelé veine, formé entre deux parois concentriques de la nacelle. Les flux primaire et secondaire sont éjectés du turboréacteur par l'arrière de la nacelle.

Une nacelle de turboréacteur présente généralement une structure tubulaire comportant :
- une section avant, ou entrée d'air, située en avant du turboréacteur ;
- une section médiane, destinée à entourer la soufflante du turboréacteur ;
- une section arrière, destinée à entourer la chambre de combustion du turboréacteur, et embarquant généralement des moyens d'inversion de poussée ;
- une tuyère d'éjection, dont la sortie est située en aval du turboréacteur.

La section arrière présente généralement une structure externe, qui définit, avec une structure interne concentrique, dite « Inner Fixed Structure » (IFS), la veine annulaire servant à canaliser le flux d'air froid.

Les moyens d'inversion de poussée permettent, lors de l'atterrissage d'un avion, d'améliorer la capacité de freinage de celui-ci en redirigeant vers l'avant une fraction majoritaire de la poussée engendrée par le turboréacteur. Dans cette phase, l'inverseur obstrue généralement la veine du flux froid et dirige ce dernier vers l'avant de la nacelle, engendrant de ce fait une contre-poussée qui vient s'ajouter au freinage des roues de l'avion. Les moyens mis en oeuvre pour réaliser cette réorientation du flux froid varient suivant le type d'inverseur. Une configuration courante est celle des inverseurs de poussée dits « à grilles ». Dans ce type d'inverseur de poussée, le capot externe de la section arrière est coulissant (voir par exemple le document US7484356). La translation vers l'arrière de ce capot coulissant permet de découvrir des grilles d'inversion mettant en communication la veine de flux froid et l'extérieur de la nacelle. La translation du capot coulissant permet en outre de déployer des volets de blocage dans la veine de flux froid. Ainsi, par l'action combinée des volets de blocage et des grilles d'inversion, le flux froid est redirigé vers l'avant de la nacelle.

Comme évoqué plus haut, les moyens d'inversion de poussée sont logés dans la section arrière d'une nacelle. On connait principalement trois types de configuration structurelle pour la section arrière, à savoir les structures respectivement dites « en C » (ou, en anglais, « C-duct »), « en D » (ou « D-duct ») et en « O » (ou « O-duct »).

Dans une nacelle à structure en D, les structures interne et externe de la section arrière de la nacelle sont solidaires l'une de l'autre, par l'intermédiaire de deux ilots de liaisons dénommés birfucations. Les bifurcations sont disposées respectivement selon les positions dites « à douze heures » (bifurcation supérieure) et « à six heures » (bifurcation inférieure). On rappelle que les positions « à douze heure » et « à six heures » sont définies conventionnellement par analogie avec un cadran de montre, la nacelle étant en position de fonctionnement, c'est-à-dire sous aile. La position « à douze heures » se situe ainsi au niveau du mat d'accrochage de la nacelle, tandis que la position « à six heures » correspond à la position diamétralement opposée. Dans le cas d'une nacelle à structure en D, le capot coulissant est monté à translation sur la structure externe de la section arrière. Le capot coulissant est en général constitué de deux demi-parties.

Dans une nacelle à structure en O ou en C, la section arrière est configurée de telle sorte qu'une bifurcation inférieuren'est pas nécessaire. Cela réprésente un grand gain d'efficacité pour l'ensemble propulsif puisque que la veine de flux froid n'est plus obstruée dans sa partie inférieure comme c'est le cas pour les structures en D. De plus, les structures en O ou en C permettent également des gains significatifs en termes de masse.

Dans une structure en O ou en C, le capot coulissant, ou capot mobile, est en général monté sur des glissières disposées de part et d'autre du pylône (ou mât) de suspension de l'ensemble propulsif. Ces glissières peuvent être disposées directement sur le pylône, ou sur un élément intermédiaire solidaire du pylône lorsque l'ensemble propulsif est monté. Le capot est guidé et soutenu uniquement au niveau de ces glissières, donc uniquement à proximité de la position « à douze heures ».

Par ailleur, dans une structure en O, le capot coulissant forme une structure d'un seul tenant. Afin de répondre à diverses contraintes telles qu'éviter la réingestion d'air par le moteur, éviter de diriger une fraction de la poussée vers le fuselage de l'aéronef, etc., le profil des grilles assurant la redirection du flux froid n'est en général pas uniforme le long de la circonférence de l'ensemble de grilles. Il s'ensuit que les efforts latéraux liés à l'inversion de poussée subis par les grilles ne sont pas uniformément répartis. La somme de ces efforts latéraux est non nulle, ce qui génère une force latérale appliquée sur l'ensemble de grilles et donc sur l'ensemble propulsif. Cette force latérale génère un mouvement de balancier de l'ensemble propulsif.

Cette répartition non uniforme génère également une déformation non uniforme de l'inverseur, qui s'ovalise lors des phases d'inversion de poussée.

L'invention se propose de résoudre les inconvénients de l'état de la technique en permettant de limiter les déformations et mouvements parasites évoqués ci-dessus.

A cet effet, l'invention se rapporte à une nacelle de turboréacteur d'aéronef, la nacelle comportant une section arrière sans bifurcation inférieure, la section arrière comportant un système d'inversion de poussée, le système d'inversion de poussée comportant un capot mobile, la nacelle étant caractérisée en ce qu'elle comporte un système de guidage solidaire en translation du capot mobile, ledit système de guidage coopérant avec au moins un coulisseau fixe par rapport à la nacelle, le système de guidage et le coulisseau étant disposés à proximité de la position dite « à 6 heures ».

Ainsi, en prévoyant un système de guidage coopérant un coulisseau fixe, on assure une reprise des efforts latéraux en partie basse de la nacelle, en position « à six heures ». Les déformations et mouvement parasites générés dans les nacelles de type « O-duct » ou « C-duct » de l'état de la technique sont ainsi fortement limités voire totalement supprimés. En outre, le système de guidage conforme à l'invention s'intègre simplement dans la nacelle car le système de guidage est avantageusement inséré à la place d'une grille pleine, celle normalement positionnée à six heures. Par ailleurs, on réalisera avantageusement un guidage de type court, permettant ainsi de reprendre correctement les efforts latéraux tout en limitant le risque d'hyperstatisme dans le guidage du capot mobile.

Dans une réalisation, le coulisseau coopère avec le système de guidage par l'intermédiaire d'au moins un élément d'appui, tel qu'un patin, le coulisseau étant conformé pour que l'écartement, selon la direction de translation du système de guidage, entre les points d'appui du coulisseau les plus éloignés soit inférieur à un cinquième (1/5^{ème}) de la longueur de guidage assuré par le système de guidage.

Dans une réalisation, le coulisseau est solidaire d'un cadre périphérique destiné à être fixé au carter de soufflante d'un turboréacteur.

Dans une réalisation, le coulisseau est destiné à être fixé directement au carter de soufflante.

Dans une réalisation, le système de guidage comporte un rail de guidage.

Dans une réalisation, le rail de guidage comporte deux glissières latérales.

Dans une réalisation, le coulisseau comporte au moins deux patins de guidage coopérant chacun avec l'une des deux glissières du rail de guidage.

Dans une réalisation, le système d'inversion de poussée comporte des grilles d'inversion, notamment des grilles d'inversion coulissantes.

Dans une réalisation, le système d'inversion comporte des grilles d'inversion coulissantes, une extrémité avant du système de guidage étant solidaire d'un cadre périphérique solidaire des grilles d'inversion.

Dans une réalisation, le système de guidage est disposé entre deux grilles d'inversion.

Dans une réalisation, le système de guidage est disposé à l'emplacement normalement occupé par une grille dite pleine.

Dans une réalisation, le système de guidage est solidaire du cadre périphérique avant.

Dans une réalisation, une extrémité arrière du système de guidage est solidaire d'un cadre périphérique du capot mobile.

Dans une réalisation, le système de guidage est prolongé par une poutre solidaire du capot mobile.

L'invention concerne également un ensemble propulsif d'aéronef, comportant un turboréacteur à double flux, l'ensemble propulsif comportant une nacelle telle que définie ci-dessus.

L'invention se rapporte enfin à un aéronef comportant au moins un ensemble propulsif tel que défini ci-dessus, l'ensemble propulsif étant supporté par un pylône, le pylône comportant des rails de guidage du capot mobile de la nacelle.

La présente invention sera mieux comprise à la lecture de la description détaillée qui suit, faite en référence aux dessins annexés, parmi lesquels :
- les figures 1a et 1b, représentent une nacelle conforme à l'invention, respectivement en configuration « jet direct » et « jet inverse » ;
- les figures 2a et 2b représentent une partie de la section arrière de la nacelle des figures 1a et 1b, avec le système d'inversion de poussée respectivement en position rétractée et déployée ;
- les figures 3a et 3b sont des vues de détail respectivement des figures 2a et 2b ;
- la figure 3c est une vue correspondant à la figure 3a, sans le coulisseau et le cadre périphérique duquel le coulisseau est solidaire ;
- les figures 4a et 4b sont des vues isolées du système de guidage et du coulisseau, dans deux positions relatives correspondant respectivement aux positions rétractée et déployée du système d'inversion de poussée ;
- les figures 5a et 5b représentent des vues partielles d'une section arrière de nacelle conforme à l'invention et présentant un rail de guidage élargi ;
- La figure 6 représente une vue partielle d'une section arrière de nacelle conforme à l'invention, montrant le système de guidage et le coulisseau vus de côté.

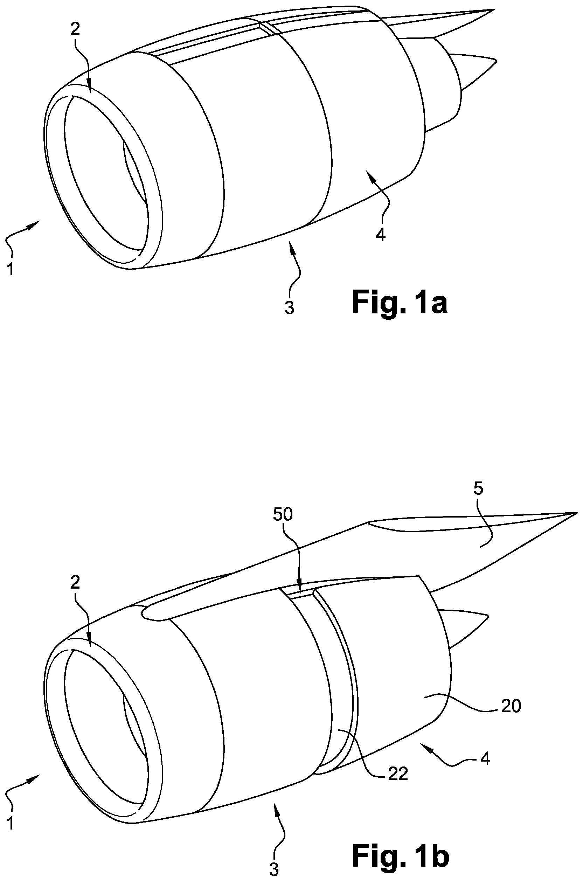

Les figure 1a et 1b montrent une vue d'une nacelle 1 conforme à l'invention. Celle-ci comporte de manière conventionnelle une entrée d'air 2, une section médiane 3, ainsi qu'une section arrière 4. Sur la figure 1a, la nacelle 1 est représentée seule, tandis que sur la figure 1b, on peut voir la nacelle 1 montée sur un pylône 5 (également connu sous le nom de « mât réacteur»). Par ailleurs, la figure 1a montre la nacelle en configuration « jet direct », c'est-à-dire avec le système d'inversion de poussée en position rétractée, tandis que la figure 1b montre la nacelle en configuration « jet inverse », c'est-à-dire avec le système d'inversion de poussée en position déployée. Ainsi, on peut voir sur la figure 1b qu'un capot mobile 20 de la section arrière 4 est en position reculée, laissant apparaitre un ensemble de grilles d'inversion 22. Dans l'exemple, le mouvement du capot mobile 20 est supporté et guidé par des rails 50 disposés de part et d'autre du pylône 5.

Dans l'exemple, la structure de la nacelle est de type « en O » (ou « O-duct ») et ne comporte donc pas de bifurcation dans la partie inférieure de la veine de flux froid. Il est à noter que l'invention est également applicable à une nacelle à structure en C.

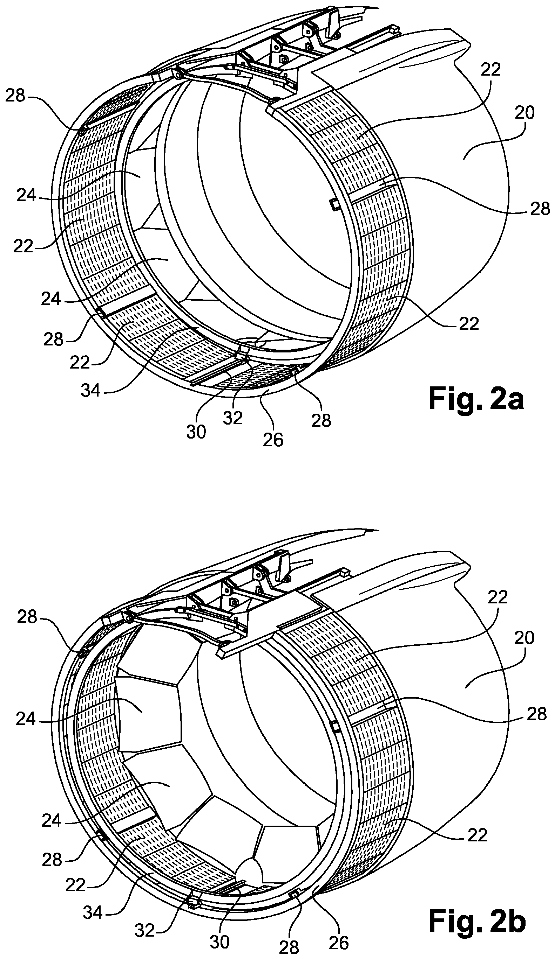

Les figures 2a et 2b représentent une partie de la section arrière de la nacelle des figures 1a et 1b, montrant les éléments du système d'inversion de poussée respectivement en position rétractée et en position déployée.

Le système d'inversion de poussée comprend un capot mobile 20, d'un seul tenant, qui forme la surface extérieure de la section arrière de la nacelle. Le capot mobile 20 est monté coulissant, dans l'exemple par l'intermédiaire des rails 50, solidaires du pylône 5 supportant l'ensemble propulsif (soit l'ensemble formé par un turboréacteur et la nacelle associée). Le système d'inversion de poussée comprend en outre des grilles d'inversion 22, dans l'exemple des grilles coulissantes, et des volets de blocage 24 mobiles en rotation. Le système d'inversion de poussée comporte des actionneurs (non représentés), notamment des actionneurs électromécaniques, permettant de faire coulisser le capot mobile entre sa position rétractée (figure 2a) et sa position déployée (figure 2b), et inversement.

Lorsque le système d'inversion de poussée est rétracté (figure 2a) :
- le capot mobile 20 est en position rétractée, correspondant à une position avancée dans laquelle il assure la continuité aérodynamique avec la section médiane de la nacelle ;
- les volets de blocage 24 sont en position rétractée, position dans laquelle ils sont alignés avec la surface interne du capot mobile 20 ;
- les grilles d'inversion 22 sont en position rétractée (ou avancée), position dans laquelle elles sont disposées autour du carter de soufflante du turboréacteur.

Lorsque le système d'inversion de poussée est déployé (figure 2b) :
- le capot mobile est en position déployée, correspondant à une position reculée, dans laquelle il découvre les grilles d'inversion 22 qui sont dans leur position reculée ;
- les volets de blocage 24 sont en position déployée, position dans laquelle ils obstruent au moins partiellement la veine de flux froid ;
- les grilles d'inversion 22 sont en position déployée (ou reculée), position dans laquelle elles sont disposées en arrière du carter de soufflante du turboréacteur, et dans laquelle elles redirigent le flux froid vers l'extérieur de la nacelle.

A noter que les grilles d'inversion 22 étant dans l'exemple des grilles coulissantes, celles-ci sont liées en translation au capot mobile 20, et la position relative des grilles d'inversion 22 par rapport au capot mobile 20 ne varie pas lors du déploiement ou de la rétractation du système d'inversion de poussée.

Les grilles d'inversion 22 sont solidaires d'un cadre périphérique avant 26. Plusieurs logements 28 sont prévus pour les actionneurs du système d'inversion de poussée. Ces logements 28, au nombre de quatre dans l'exemple des figures 2a et 2b, sont disposés entre certaines des grilles d'inversion 22.

En position « six heures » (ou à proximité de cette position), à l'emplacement normalement occupé par une grille dite pleine, une telle grille pleine étant prévue pour éviter une redirection du flux froid vers le bas, est disposé un système de guidage 30. Ainsi, le système de guidage 30 se trouve avantageusement disposé entre deux grilles d'inversion 22, en arrière du cadre périphérique avant 26 des grilles 22.

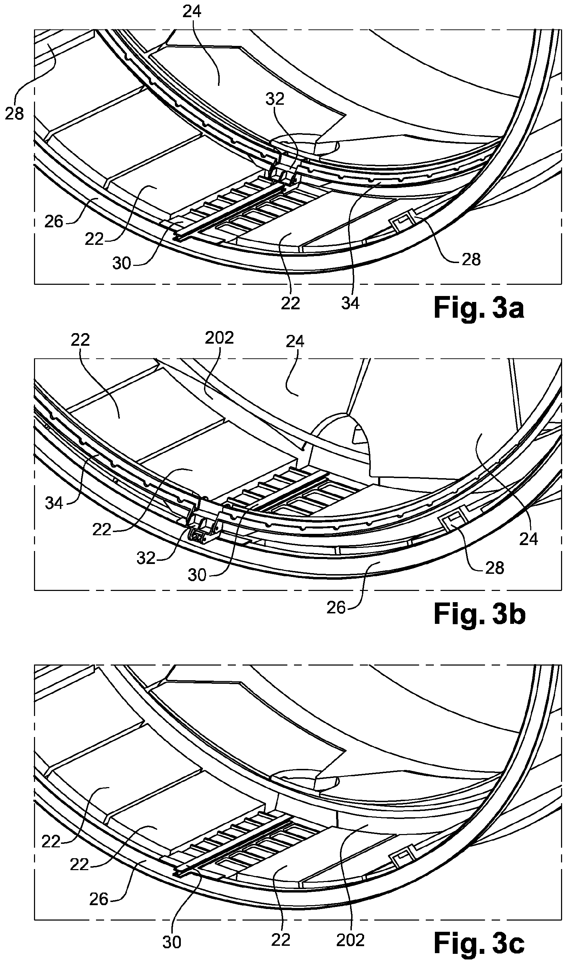

Conformément à l'invention, le système de guidage 30 est fixe par rapport au capot mobile 20 (et donc, dans l'exemple, par rapport aux grilles d'inversion 22), étant dans l'exemple solidaire du cadre périphérique avant 26. Le système de guidage 30 coopère avec un coulisseau 32, mobile par rapport capot mobile 20 et aux grilles d'inversion de poussée, et donc par rapport au système de guidage 30. Le coulisseau 32 est cependant fixe par rapport aux éléments non mobiles de la nacelle et de l'ensemble propulsif. Dans l'exemple, le coulisseau 32 est solidaire d'un cadre périphérique 34, qui dans l'exemple est une pièce solidaire du carter de soufflante, connue sous le nom de virole de carter intermédiaire. En variante, le coulisseau 32 peut être fixé directement au carter de soufflante. Ainsi, comme on peut le voir sur les figures 2a et 2b, la position relative du coulisseau 32 et du système de guidage 30 est liée à la position du capot mobile 20 et donc des grilles d'inversion 22. Cette position relative présente deux extrêmes, correspondant aux positions rétractée et déployée du système d'inversion de poussée. Ces deux positions extrêmes sont mieux visibles sur les figures 3a (inverseur de poussée rétracté) et 3b (inverseur de poussée déployé).

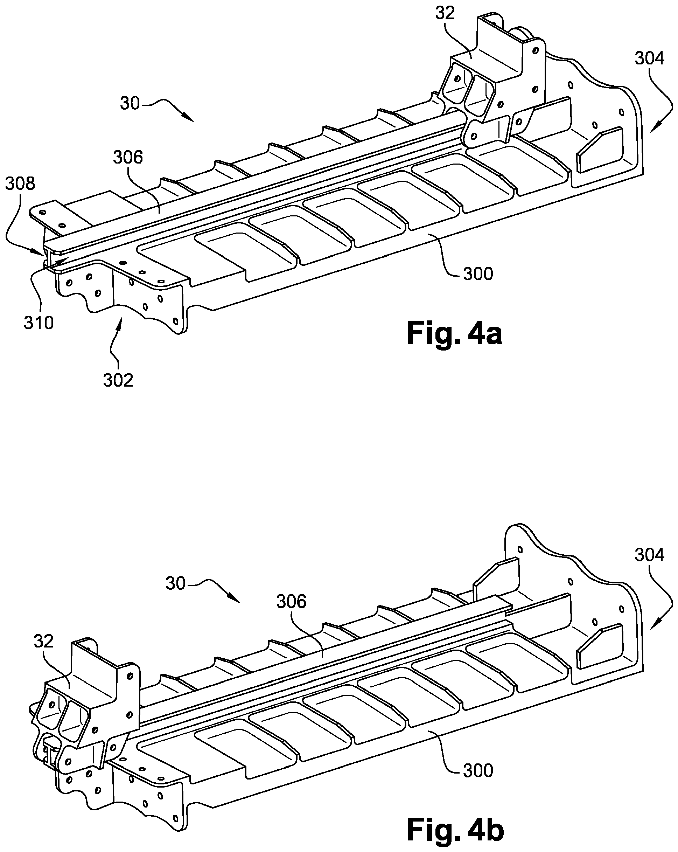

Les figures 4a et 4b sont des vues isolées du système de guidage 30 et du coulisseau 32. Le système de guidage 30 comporte un corps 300 qui présente une partie avant 302, prévue pour être fixée au cadre périphérique avant 26, par exemple par éclissage, et une partie arrière 304, prévue pour être fixée au capot mobile 20, par exemple par rivetage et/ou éclissage. Dans l'exemple, le système de guidage 30 est solidaire d'un cadre périphérique 202 (visible sur la figure 3c) du capot mobile 20. Le système de guidage 30 comporte une portion en saillie, un rail de guidage 306. Dans l'exemple, le rail de guidage 306 comporte deux glissières latérales 308, 310. Dans l'exemple des figures 4a et 4b, le système de guidage 30 constitue une pièce monobloc. On pourra toutefois préférer réaliser cet élément en deux parties ou plus, par exemple le corps 300 et le rail de guidage 306, notamment afin de permettre fixer le rail 306 au corps 300 de manière réglable (notamment en hauteur). En outre ces deux éléments pourront être réalisés dans des matériaux différents, par exemple un matériau composite pour le corps 300 et un matériau métallique pour le rail 306.

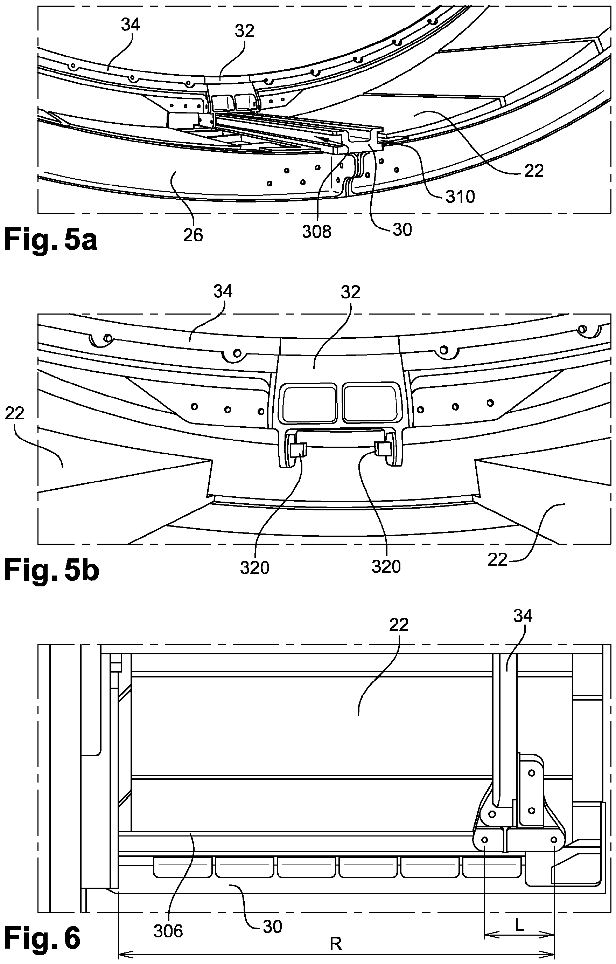

Le coulisseau 32 comporte des patins de guidage 320 (visibles sur la figure 5a) coopérant avec chacune des glissières latérales 308, 310. Dans l'exemple, le coulisseau 32 comporte quatre patins de guidage, disposés de part et d'autre du rail 306, en regard deux à deux. Les patins de guidage sont constitués ou revêtus d'un matériau facilitant le glissement, comme par exemple du téflon. Les patins de guidage 320 et peuvent être montés à rotation sur le coulisseau 32, ou former des patins glissants.

La figure 5a montre un rail 306 de guidage élargi, augmentant ainsi la rigidité du système de guidage.

La figure 6 montre le système de guidage et le coulisseau 32 vu de côté. Dans l'exemple la longueur R de guidage assuré par le rail 306 est de 500 mm, tandis que l'écart longitudinal L entre les points d'appui des patins de guidage est de 80 mm. Afin d'assurer une reprise des efforts latéraux satisfaisante tout en évitant le risque d'hyperstatisme, il est avantageux de réaliser un guidage court. A cet effet, on s'assurera que le rapport entre l'écart longitudinal L entre les points d'appui des patins et la longueur de guidage R soit inférieur à 0.2.

Dans une variante non représentée, le rail de guidage pourra présenter, au niveau de sa partie arrière, une extension se prolongeant sous forme d'une poutre solidaire du capot mobile 20. Ainsi, par l'intermédiaire de cette extension, le système de guidage sera solidement fixé au capot mobile 20 et participera à la rigidité de celui-ci.

Bien que l'invention ait été décrite en relation avec un exemple particulier de réalisation, il est bien évident qu'elle est limitée seulement par l'objet des revendications.

## Revendications

1. Nacelle de turboréacteur d'aéronef, la nacelle (1) comportant une section arrière (4) sans bifurcation inférieure, la section arrière comportant un système d'inversion de poussée, le système d'inversion de poussée comportant un capot mobile (20), la nacelle étant **caractérisée en ce qu'**elle comporte un système de guidage (30) solidaire en translation du capot mobile (20), ledit système de guidage (30) coopérant avec au moins un coulisseau (32) fixe par rapport à la nacelle (1), le système de guidage (30) et le coulisseau (32) étant disposés à proximité de la position dite « à 6 heures ».

2. Nacelle selon la revendication 1, dans lequel le coulisseau (32) coopère avec le système de guidage (30) par l'intermédiaire d'au moins un élément d'appui, tel qu'un patin (320), le coulisseau (32) étant conformé pour que l'écartement, selon la direction de translation du système de guidage (30), entre les points d'appui du coulisseau (32) les plus éloignés soit inférieur à un cinquième de la longueur de guidage assuré par le système de guidage (30).

3. Nacelle selon la revendication 1 ou 2, dans lequel le coulisseau (32) est soit solidaire d'un cadre périphérique (34) destiné à être fixé au carter de soufflante d'un turboréacteur, soit destiné à être fixé directement au carter de soufflante.

4. Nacelle selon l'une des revendications 1 à 3, dans laquelle le système de guidage (30) comporte un rail de guidage (306).

5. Nacelle selon la revendication précédente, dans laquelle le rail de guidage (306) comporte deux glissières (308, 310).

6. Nacelle selon la revendication précédente, dans laquelle le coulisseau (32) comporte au moins deux patins de guidage (320) coopérant chacun avec l'une des deux glissières (308, 310) du rail (306) de guidage.

7. Nacelle selon l'une des revendications précédentes, dans laquelle le système d'inversion de poussée comporte des grilles d'inversion, notamment des grilles d'inversion (22) coulissantes.

8. Nacelle selon l'une des revendications précédentes, dans laquelle les grilles d'inversion (22) sont coulissantes, une extrémité avant (302) du système de guidage (30) étant solidaire d'un cadre périphérique avant (26) solidaire des grilles d'inversion (22).

9. Nacelle selon l'une des revendications 7 ou 8, dans laquelle le système de guidage (30) est disposé entre deux grilles d'inversion (22).

10. Nacelle selon la revendication précédente, dans laquelle le système de guidage (30) est disposé à l'emplacement normalement occupé par une grille dite pleine.

11. Nacelle selon l'une des revendications 8 à 10, dans laquelle le système de guidage (30) est solidaire du cadre périphérique avant (26).

12. Nacelle selon l'une des revendications précédentes, dans laquelle une extrémité arrière (304) du système de guidage (30) est solidaire d'un cadre périphérique (202) du capot mobile (20).

13. Nacelle selon l'une revendications précédentes, dans laquelle le système de guidage (30) est prolongé par une poutre solidaire du capot mobile (20).

14. Ensemble propulsif d'aéronef, comportant un turboréacteur à double flux, l'ensemble propulsif comportant une nacelle (1) conforme à l'une des revendications précédentes.

15. Aéronef comportant au moins un ensemble propulsif conforme à la revendication précédente, l'ensemble propulsif étant supporté par un pylône (5), le pylône (5) comportant des rails de guidage du capot mobile de la nacelle.

## Patentansprüche

1. Flugzeugturbostrahltriebwerksgondel, wobei die Gondel (1) einen hinteren Abschnitt (4) ohne untere Abzweigung beinhaltet, wobei der hintere Abschnitt ein Schubumkehrsystem beinhaltet, wobei das Schubumkehrsystem eine bewegliche Abdeckung (20) beinhaltet, wobei die Gondel **dadurch gekennzeichnet ist, dass** sie ein Führungssystem (30) beinhaltet, das translationsfest mit der beweglichen Abdeckung (20) verbunden ist, wobei das Führungssystem (30) mit mindestens einem im Verhältnis zu der Gondel (1) feststehenden Schieber (32) zusammenwirkt, wobei das Führungssystem (30) und der Schieber (32) in der Nähe der "6 Uhr" genannten Position angeordnet sind.

2. Gondel nach Anspruch 1, wobei der Schieber (32) durch mindestens ein Abstützelement, wie eine Gleitkufe (320) mit dem Führungssystem (30) zusammenwirkt, wobei der Schieber (32) angepasst ist, damit der Abstand in die Translationsrichtung des Führungssystems (30) zwischen den am weitesten entfernten Abstützpunkten des Schiebers (32) kleiner als ein Fünftel der Führungslänge ist, die vom Führungssystem (30) zurückgelegt wird.

3. Gondel nach Anspruch 1 oder 2, wobei der Schieber (32) entweder fest mit einem Peripherierahmen (34), der dazu bestimmt ist, an dem Gebläsegehäuse eines Turbostrahltriebwerks fixiert zu werden, befestigt ist, oder dazu bestimmt ist, direkt an dem Gebläsegehäuse fixiert zu werden.

4. Gondel nach einem der Ansprüche 1 bis 3, wobei das Führungssystem (30) eine Führungsschiene (306) beinhaltet.

5. Gondel nach dem vorstehenden Anspruch, wobei die Führungsschiene (306) zwei Gleitschienen (308, 310) beinhaltet.

6. Gondel nach dem vorstehenden Anspruch, wobei der Schieber (32) mindestens zwei Führungsgleitkufen (320) beinhaltet, die jeweils mit der einen der beiden Gleitschienen (308, 310) der Führungsschiene (306) zusammenwirken.

7. Gondel nach einem der vorstehenden Ansprüche, wobei das Schubumkehrsystem Umkehrgitter, insbesondere gleitende Umkehrgitter (22) beinhaltet.

8. Gondel nach einem der vorstehenden Ansprüche, wobei die Umkehrgitter (22) gleitend sind, wobei ein vorderes Ende (302) des Führungssystems (30) fest mit einem vorderen Peripherierahmen (26) verbunden ist, der fest mit den Umkehrgittern (22) verbunden ist.

9. Gondel nach einem der Ansprüche 7 oder 8, wobei das Führungssystem (30) zwischen zwei Umkehrgittern (22) angeordnet ist.

10. Gondel nach dem vorstehenden Anspruch, wobei das Führungssystem (30) an der Stelle angeordnet ist, die normalerweise durch ein voll genanntes Gitter eingenommen wird.

11. Gondel nach einem der Ansprüche 8 bis 10, wobei das Führungssystem (30) fest mit dem vorderen Peripherierahmen (26) verbunden ist.

12. Gondel nach einem der vorstehenden Ansprüche, wobei ein hinteres Ende (304) des Führungssystems (30) fest mit einem Peripherierahmen (202) der beweglichen Abdeckung (20) verbunden ist.

13. Gondel nach einem der vorstehenden Ansprüche, wobei das Führungssystem (30) durch einen fest mit der beweglichen Abdeckung (20) verbundenen Träger verlängert wird.

14. Antriebseinheit eines Flugzeugs, ein Doppelstrom-Turbostrahltriebwerk beinhaltend, wobei die Antriebseinheit eine Gondel (1) nach einem der vorstehenden Ansprüche beinhaltet.

15. Flugzeug, mindestens eine Antriebseinheit nach dem vorstehenden Anspruch beinhaltend, wobei die Antriebseinheit durch einen Mast (5) getragen wird, wobei der Mast (5) Führungsschienen der beweglichen Abdeckung der Gondel beinhaltet.

## Claims

1. A nacelle for an aircraft turbojet engine, the nacelle (1) including a rear section (4) without a lower bifurcation, the rear section including a thrust reverser system, the thrust reverser system including a movable cowl (20), the nacelle being **characterized in that** it includes a guide system (30) secured in translation to the movable cowl (20), said guide system (30) cooperating with at least one slide (32) fixed relative to the nacelle (1), the guide system (30) and the slide (32) being disposed proximate to the position called « 6 O'clock » position.

2. The nacelle according to claim 1, wherein the slide (32) cooperates with the guide system (30) via at least one bearing element, such as a pad (320), the slide (32) being shaped so that the spacing, in the direction of translation of the guide system (30), between the farthest bearing points of the slide (32) is less than one-fifth of the length of guidance ensured by the guide system (30).

3. The nacelle according to claim 1 or 2, wherein the slide (32) is either secured to a peripheral frame (34) intended to be fastened to the fan casing of a turbojet engine, or intended to be directly fastened to the fan casing.

4. The nacelle according to any of claims 1 to 3, wherein the guide system (30) includes a guide rail (306).

5. The nacelle according to the preceding claim, wherein the guide rail (306) includes two guideways (308, 310).

6. The nacelle according to the preceding claim, wherein the slide (32) includes at least two guide pads (320) each cooperating with one of the two guideways (308, 310) of the guide rail (306).

7. The nacelle according to any of the preceding claims, wherein the thrust reverser system includes thrust reverser cascades, in particular sliding thrust reverser cascades (22).

8. The nacelle according to any of the preceding claims, wherein the thrust reverser cascades (22) are sliding, a front end (302) of the guide system (30) being secured to a front peripheral frame (26) secured to the thrust reverser cascades (22).

9. The nacelle according to any of claims 7 or 8, wherein the guide system (30) is disposed between two thrust reverser cascades (22).

10. The nacelle according to the preceding claim, wherein the guide system (30) is disposed at the location normally occupied by a cascade called solid cascade.

11. The nacelle according to any of claims 8 to 10, wherein the guide system (30) is secured to the front peripheral frame (26).

12. The nacelle according to any of the preceding claims, wherein a rear end (304) of the guide system (30) is secured to a peripheral frame (202) of the movable cowl (20).

13. The nacelle according to any of the preceding claims, wherein the guide system (30) is extended by a beam secured to the movable cowl (20).

14. An aircraft propulsion unit, including a bypass turbojet engine, the propulsion unit including a nacelle (1) in accordance with any of the preceding claims.

15. An aircraft including at least one propulsion unit in accordance with the preceding claim, the propulsion unit being supported by a mast (5), the mast (5) including guide rails of the movable cowl of the nacelle.
